# FASCICULE DE BREVET EUROPEEN

(11) **EP 2 460 731 B1**
(45) Date de publication et mention de la délivrance du brevet: **20.04.2016**
(21) Numéro de dépôt: 11306615.3
(22) Date de dépôt: 06.12.2011
(51) Int. Cl.: B64F 1/00, G01P 5/165, G01P 1/02

(54) **Dispositif de protection d'une sonde externe d'un aéronef**
Schutzeinrichtung für eine externe Luftfahrzeugsonde
Protection device for an external aircraft probe

(30) Priorité: 06.12.2010 FR 1060130
(43) Date de publication de la demande: 06.06.2012
(73) Titulaire: Airbus Opérations SAS, 31060 Toulouse (FR); Airbus SAS, 31700 Blagnac (FR)
(72) Inventeur: Vieules, Christophe, 31500 Toulouse (FR); Outters, Xavier, 31500 Toulouse (FR); Mereau, Philippe, 81310 Parisot (FR)
(74) Mandataire: Fantin, Laurent

(56) Documents cités:
- EP-A1- 1 548 412
- GB-A- 2 279 052
- US-A- 5 938 147
- US-A1- 2010 089 147
- US-B1- 6 612 521

## Description

La présente invention est relative à un dispositif de protection d'une sonde externe d'un aéronef.

Un aéronef comprend généralement différentes sondes externes disposées en saillie par rapport à la surface extérieure dudit aéronef, lesdites sondes permettant de connaître différentes informations utiles au fonctionnement de l'aéronef et/ou à la navigation.

Lors du stationnement de l'aéronef, ces sondes extérieures doivent être protégées des intempéries.

De même, lors des opérations de lavage et de peinture, lesdites sondes doivent être protégées des différents fluides utilisés pour ces opérations.

Ces protections sont utilisées au sol uniquement et sont retirées avant la mise en vol.

Aussi, on connaît différents dispositifs de protection.

Un premier type de protection de l'art antérieur se présente sous la forme d'une simple enveloppe en tissu imprégné venant recouvrir ladite sonde.

Ce premier type de protection ne permet pas d'assurer une étanchéité suffisante.

Un deuxième type de protection de l'art antérieur se présente sous la forme d'une enveloppe rigide, par exemple en Nylon®, ou semi-rigide, par exemple en plastique moulé.

Un tel type de protection est décrit dans la demande publiée GB-2.279.052, qui est considérée l'état de la technique plus proche. Aussi, afin de réduire son encombrement, les formes de la protection rigide ou semi-rigide correspondent aux formes extérieure de la sonde.

Un premier inconvénient de ce deuxième type de protection rigide ou semi-rigide est de nécessiter un montage et un démontage méticuleux pour éviter d'endommager la sonde.

Selon un deuxième inconvénient, chaque protection rigide ou semi-rigide est dédiée à une sonde en particulier et n'est pas interchangeable d'une sonde à une autre.

La présente invention vise à pallier les inconvénients de l'art antérieur.

Ainsi, l'invention a pour objet un dispositif de protection d'une sonde externe d'un aéronef faisant saillie au travers d'une ouverture réalisée dans la surface extérieure de l'aéronef, ledit dispositif de protection comprenant une bride rigide de fixation à la surface extérieure de l'aéronef et une enveloppe souple de protection de la sonde.

Cette solution permet d'obtenir un dispositif de protection garantissant une étanchéité optimale, facile à installer et à enlever sans risquer d'endommager la sonde ou l'aéronef, facilement identifiable et de faible encombrement afin de pouvoir être stocké dans un sac de taille limitée.

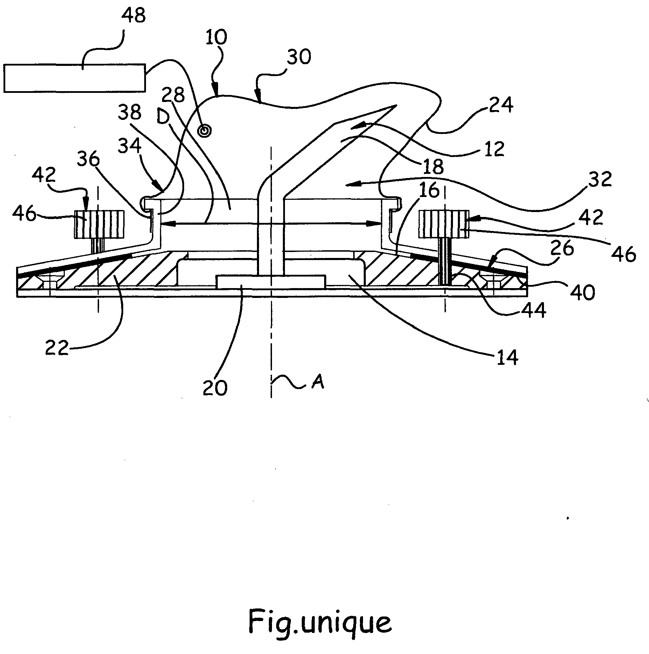

D'autres caractéristiques et avantages ressortiront de la description qui va suivre de l'invention, description donnée à titre d'exemple uniquement, en regard de la figure unique représentant une vue en coupe selon un plan médian d'un dispositif de protection selon l'invention monté sur une sonde externe.

Comme illustré sur la figure unique, le dispositif de protection 10 selon l'invention est destiné à équiper une sonde externe 12 d'un aéronef.

La sonde 12 fait saillie au travers d'une ouverture 14 réalisée dans la surface extérieure 16 de l'aéronef.

Comme représenté, la sonde 12 comprend une partie extérieure 18 dépassant au-delà de la surface extérieure 16 et nécessitant d'être protégée des intempéries lors du stationnement de l'aéronef et de divers fluides lors des opérations de lavage ou de peinture, ainsi qu'une partie intérieure 20 en retrait de la surface extérieure 16 de l'aéronef.

Cette partie extérieure 18 peut par exemple prendre la forme d'un conduit incliné dans le cas d'une sonde destinée à mesurer une pression par exemple. Aussi, afin de protéger la partie extérieure 18 de la sonde, le dispositif 10 selon l'invention comprend une bride rigide 22 de fixation à la surface extérieure 16 de l'aéronef et une enveloppe souple 24 de protection.

L'enveloppe souple 24 est réalisée dans un matériau étanche et reliée de manière étanche à la bride 22.

La liaison entre la bride 22 et la surface extérieure 16 est équipée de moyens d'étanchéité 26, la rigidité de la bride 22 garantissant la qualité de l'étanchéité réalisée par les moyens d'étanchéité 26.

Ainsi, l'enveloppe souple 24 est réalisée dans un tissu plastifié ou dans un matériau polymérique souple, tandis que la bride 22 est réalisée dans un matériau métallique ou dans un matériau polymérique éventuellement chargé de fibres. Ensuite, ladite bride 22 s'étend tout autour de la base de la partie extérieure 18 et comprend un passage central 28 plus large que la partie extérieure 18 afin de faciliter la mise en place du dispositif de protection 10 sur la sonde et d'éviter d'endommager celle-ci lors du montage ou du démontage du dispositif.

Le passage central 28 représenté sur la figure unique est cylindrique selon un axe A sensiblement perpendiculaire à la surface extérieure 16 de l'aéronef et de diamètre D plus large que la partie extérieure 18 de la sonde.

Selon une variante, le passage 28 peut être elliptique.

L'enveloppe souple 24 est dimensionnée de manière à pouvoir recouvrir les plus longs et/ou larges modèles de sondes externes, et sa souplesse la rend adaptable à de nombreuses géométries pouvant être prises par la partie extérieure 18 de la sonde externe.

Ainsi, un dispositif 10 unique selon l'invention peut être utilisé pour la protection de différents modèles de sondes.

Selon un autre avantage, la souplesse de l'enveloppe 24 améliore la compacité du dispositif de protection 10, notamment en vue de son stockage dans un sac de taille limitée ou dans un espace réduit.

L'enveloppe 24 est fermée à son extrémité extérieure 30 et ouverte par une bouche 32 à son extrémité intérieure 34, le bord 36 de la bouche 32 étant relié de manière étanche à la bride 22 tout autour du passage central 28.

L'enveloppe souple 24 peut être reliée de manière étanche à la bride 22 selon différentes variantes.

Selon une première variante, la bride 22 comprend une collerette 38 sur laquelle est rapporté le bord 36 de la bouche 32, le bord 36 étant enserré sur la collerette par un collier, par exemple métallique ou plastique.

Selon une deuxième variante, le bord 36 de la bouche 32 est collé ou soudé à la bride rigide 22 tout autour du passage central 28.

Selon une troisième variante, le bord 36 de la bouche 32 est enserré entre la bride 22 et une contre-bride.

Les moyens d'étanchéité 26 de la liaison entre ladite bride 22 et la surface extérieure 16 prennent la forme d'un joint plat 40 intercalé entre la bride 22 et la surface extérieure de l'aéronef.

Selon différentes variantes possibles, le joint 40 est un joint en mousse, un joint en élastomère, un joint torique, un joint à lèvre, un joint en fibres, ou un joint métalloplastique.

Afin d'autoriser une mise en place rapide et aisée, le dispositif 10 comprend des moyens de fixation rapide 42 de la bride rigide 22 à la surface extérieure 16 de l'aéronef.

Comme illustré sur la figure, ces moyens de fixation rapide 42 prennent la forme d'alésages 44 réalisés dans la surface extérieure 16, répartis autour de l'ouverture 14 et recevant des pièces à emboîtement 46.

Ces pièces à emboîtement 46 peuvent être des broches à billes, éventuellement rétractables, des broches à baïonnette de type quart de tour, des épingles, des vis, ou des vis avec limiteur de couple.

De plus, les pièces à emboîtement 46 peuvent aussi être équipées d'écrou de serrage ou d'un ressort de maintien pour garantir le maintien en position du dispositif 10.

Associés à la rigidité de la bride 22 et à celle de la surface extérieure 16 de l'aéronef, les moyens de fixation rapide 42 permettent de comprimer les moyens d'étanchéité 26 et contribuent ainsi à la qualité de l'étanchéité de la protection réalisée par le dispositif selon l'invention.

D'une manière générale, on constate que l'étanchéité est mieux garantie avec le dispositif selon la présente invention qu'avec les dispositifs de l'art antérieur, par conséquent, la sonde externe 12 est mieux protégée lors des intempéries et des opérations de nettoyage ou de peinture.

Selon d'autres avantages, la conception du dispositif selon l'invention permet d'optimiser la masse par rapport aux fonctions apportées, d'optimiser le coût unitaire par rapport aux fonctions apportées, et d'optimiser l'empreinte environnementale par rapport aux fonctions apportées.

Enfin, afin de bien signaler qu'il doit être désinstallé avant la mise en vol de l'aéronef, le présent dispositif de protection peut être équipé d'une flamme 48 signalant la nécessité dudit retrait au personnel d'entretien ou de maintenance.

## Revendications

1. Dispositif de protection (10) d'une sonde externe (12) d'un aéronef faisant saillie au travers d'une ouverture (14) réalisée dans la surface extérieure (16) de l'aéronef, ledit dispositif de protection (10) comprenant une bride rigide (22) de fixation à la surface extérieure (16) de l'aéronef et une enveloppe souple (24) de protection de la sonde.

2. Dispositif de protection (10) selon la revendication 1, ladite sonde (12) comprenant une partie extérieure (18) dépassant au-delà de la surface extérieure (16), dans lequel ladite bride (22) comprend un passage central (28) plus large que la partie extérieure (18).

3. Dispositif de protection (10) selon la revendication 2, dans lequel ladite enveloppe souple (24) est fermée à son extrémité extérieure (30) et ouverte par une bouche (32) à son extrémité intérieure (34), le bord (36) de la bouche (32) étant relié de manière étanche à la bride (22) tout autour du passage central (28).

4. Dispositif de protection (10) selon la revendication 3, dans lequel le passage central (28) est cylindrique selon un axe (A) perpendiculaire à la surface extérieure (16) de l'aéronef et de diamètre (D) plus large que la partie extérieure (18) de la sonde.

5. Dispositif de protection (10) selon l'une des revendications 1 à 4, dans lequel ladite enveloppe souple (24) est réalisée dans un matériau étanche.

6. Dispositif de protection (10) selon la revendication 4, dans lequel la liaison entre ladite bride (22) et la surface extérieure (16) est équipée de moyens d'étanchéité (26) prenant la forme d'un joint plat (40) intercalé entre la bride (22) et la surface extérieure (16) de l'aéronef.

7. Dispositif de protection (10) selon l'une des revendications 1 à 6, dans lequel ledit dispositif (10) comprend des moyens de fixation rapide (42) de la bride rigide (22) à la surface extérieure (16) de l'aéronef.

8. Dispositif de protection (10) selon la revendication 7, dans lequel les moyens de fixation rapide (42) prennent la forme d'alésages (44) réalisés dans la surface extérieure (16), répartis autour de l'ouverture (14) et recevant des pièces à emboîtement (46).

## Patentansprüche

1. Schutzvorrichtung (10)für eine externen Sonde (12) eines Luftfahrzeugs, die durch eine in der äußeren Oberfläche (16) des Luftfahrzeugs ausgebildete Öffnung (14) herausragt, wobei die Schutzvorrichtung (10) einen starren Flansch (22) für die Befestigung an der äußeren Oberfläche (16) des Luftfahrzeugs und eine weiche Hülle (24) für den Schutz der Sonde aufweist.

2. Schutzvorrichtung (10) nach Anspruch 1, wobei die Sonde (12) einen äußeren Teil (18) aufweist, der sich über die äußere Oberfläche (16) hinaus erstreckt, und bei der der Flansch (22) eine zentrale Durchführung (28) aufweist, die größer als der äußere Teil (18) ist.

3. Schutzvorrichtung (10) nach Anspruch 2, bei der die weiche Hülle (24) an ihrem äußeren Ende (30) geschlossen und an ihrem inneren Ende (34) offen und mit einer Mündung (32) versehen ist, wobei der Rand (36) der Mündung (32) auf dichte Weise um die zentrale Durchführung (28) herum mit dem Flansch (22) verbunden ist.

4. Schutzvorrichtung (10) nach Anspruch 3, bei der die zentrale Durchführung (28) um eine zur äußeren Oberfläche (16) des Luftfahrzeugs im rechten Winkel ausgerichteten Achse (A) zylindrisch ist und von einem Durchmesser (D) ist, der größer ist als der äußere Teil (18) der Sonde.

5. Schutzvorrichtung (10) nach einem der Ansprüche 1 bis 4, bei der die weiche Hülle (24) aus einem dichten Material hergestellt ist.

6. Schutzvorrichtung (10) nach Anspruch 4, bei der die Verbindung zwischen dem Flansch (22) und der äußeren Oberfläche (16) mit Dichtmitteln (26) ausgestattet ist, die als flaches Verbindungsstück (40) ausgestaltet sind, das sich zwischen dem Flansch (22) und der äußeren Oberfläche (16) des Luftfahrzeugs befindet.

7. Schutzvorrichtung (10) nach einem der Ansprüche 1 bis 6, bei der die Vorrichtung (10) Mittel (42) für die schnelle Befestigung des starren Flansches (22) an der äußeren Oberfläche (16) des Luftfahrzeugs aufweist.

8. Schutzvorrichtung (10) nach Anspruch 7, bei der die Mittel (42) für die schnelle Befestigung als Ausnehmungen (44) ausgestaltet sind, die in der äußeren Oberfläche (16) ausgebildet sind, die um die Öffnung (14) verteilt sind und die Stücke zum Einbringen (46) aufnehmen.

## Claims

1. Device (10) for protection of an external probe (12) of an aircraft that projects through an opening (14) made in the outside surface (16) of the aircraft, whereby said protective device (10) comprises a rigid flange (22) for attachment to the outside surface (16) of the aircraft and a flexible envelope (24) for protection of the probe.

2. Protective device (10) according to Claim 1, whereby said probe (12) comprises an outside part (18) that goes beyond the outside surface (16), in which said flange (22) comprises a central passage (28) that is broader than the outside part (18).

3. Protective device (10) according to Claim 2, in which said flexible envelope (24) is closed at its outside end (30) and opened by a mouth (32) at its inside end (34), the edge (36) of the mouth (32) being connected in an airtight manner to the flange (22) all around the central passage (28).

4. Protective device (10) according to Claim 3, in which the central passage (28) is cylindrical along an axis (A) that is perpendicular to the outside surface (16) of the aircraft and has a broader diameter (D) than the outside part (18) of the probe.

5. Protective device (10) according to one of Claims 1 to 4, in which said flexible envelope (24) is made of an airtight material.

6. Protective device (10) according to Claim 4, in which the connection between said flange (22) and the outside surface (16) is equipped with sealing means (26) taking the form of a flat seal (40) inserted between the flange (22) and the outside surface (16) of the aircraft.

7. Protective device (10) according to one of Claims 1 to 6, in which said device (10) comprises rapid attachment means (42) of the rigid flange (22) to the outside surface (16) of the aircraft.

8. Protective device (10) according to Claim 7, in which the rapid attachment means (42) take the shape of bores (44) made in the outside surface (16), distributed around the opening (14) and accommodating the interlocking parts (46).
